# EUROPEAN PATENT SPECIFICATION

(11) **EP 4 122 344 B1**
(45) Date of publication and mention of the grant of the patent: **06.05.2026**
(21) Application number: 21771502.8
(22) Date of filing: 18.03.2021
(51) Int. Cl.: A41D 13/11, A62B 23/02, A41H 43/02, D06M 11/07, D06M 11/13, D06M 23/08, A62B 18/02, B01D 39/16, A62B 9/00

(54) **MASK CONTAINING NANO DRIED METAL CHLORIDE SALT**
MASKE MIT NANOGETROCKNETEM METALLCHLORIDSALZ
MASQUE CONTENANT UN SEL DE CHLORURE MÉTALLIQUE NANO-SÉCHÉ

(30) Priority: 18.03.2020 KR 20200032944; 26.05.2020 KR 20200062844; 12.10.2020 KR 20200130791; 07.12.2020 KR 20200169630
(43) Date of publication of application: 25.01.2023
(73) Proprietor: Industry Academic Cooperation Foundation of Yeungnam University, Gyeongsan-si, Gyeongsangbuk-do 38541 (KR)
(72) Inventor: BYEON, Jeong Hoon, Gyeongsan-si Gyeongsangbuk-do 38541 (KR)
(74) Representative: Eisenführ Speiser
(86) International application number: PCT/KR2021/003367
(87) International publication number: WO 2021/187917

(56) References cited:
- CN-A- 102 499 493
- CN-B- 101 589 854
- KR-A- 20120 093 795
- KR-A- 20170 077 975
- KR-A- 20170 077 975
- KR-A- 20190 022 170
- KR-A- 20190 030 221
- KR-B1- 100 843 191
- KR-B1- 102 014 731
- US-A1- 2017 225 447

## Description

### Technical Field

The present application relates to methods for attaching metal chloride nanoparticles to a substrate, as well as a method using the intermediate product of said methods for manufacturing a mask.

### Background Art

In general, a mask is an instrument for protecting the respiratory tract of the human body from polluted air or cold air, which is classified, typically, as a cold protection mask for protecting the respiratory tract from cold air, a dust mask for protecting the respiratory tract from dust and the like, and a medical mask that blocks the penetration of foreign substances or bacteria and simultaneously blocks secretions or bacteria from the user from being discharged to the outside.

Recently, environmental pollution has emerged as a serious problem, and the environmental atmosphere, where ordinary people live, contains a lot of foreign substances such as fine dust, so that such fine dust and yellow sand are introduced into the human respiratory system, thereby having fatal adverse effects on humans, such as causing various diseases.

Here, the fine dust is small and fine dust particles that are invisible to our eyes, which includes numerous air pollutants along with sulfurous acid gas, nitrogen oxides, lead, ozone, carbon monoxide, and the like, the exhaust causes of which are divided into artificial occurrence that occurs in automobiles or factories and natural occurrence, such as yellow sand from sandstorm dust, volcanic ashes, and dust from forest fire, and when a person inhales the fine dust generated in this way, it penetrates deep into the alveoli, causing various respiratory diseases, such as asthma, headache and atopy, and in particular, if the old and the weak continuously inhale it, there is a serious problem that leads to death from lung diseases by lowering immune function.

Particularly, mask wearing becomes more and more common, because air pollution caused by yellow sand, fine dust or pollution, and the like has recently become more and more serious, and due to the epidemic called COVID-19.

Moreover, it can be said that it is urgent to develop a mask with better functionality while being safer to keep pace with the emergence of new highly contagious diseases due to the gradual increase in bacterial resistance and the occurrence of mutants.

### Disclosure

### Technical Problem

According to one example of the present application, it is intended to provide a mask containing a nano dried metal chloride salt, capable of promoting the inactivation of bacterial substances, such as viruses, adhering to the outer surface of the mask during use of the mask, and simultaneously removing moisture coming in and out therethrough during use of the mask, and a dry manufacturing process therefor.

### Technical Solution

The invention is defined by the appended independent claims 1-4.

### Advantageous Effects

According to one example of the present application, it is possible to promote inactivation of bacterial substances, such as viruses, adhering to the surface during use of the mask.

According to one example of the present application, it is possible to remove moisture coming in and out therethrough during use of the mask.

According to one example of the present application, it is possible to provide a mask having excellent comfortableness.

### Description of Drawings

Figure 1 is a schematic diagram of a laminate for a mask, which is one example of the present application.
Figure 2 is a schematic diagram of a laminate for a mask, which is another example of the present application.
Figure 3 is a schematic diagram of a laminate for a mask, which is another example of the present application.
Figure 4 is SEM images of a laminate for a mask, which is another example of the present application.
Figure 5 is a flowchart of a method for attaching metal chloride nanoparticles, which is another example of the present application.
Figure 6 is a schematic diagram of a method for attaching metal chloride nanoparticles, which is another example of the present application.
Figure 7 is a flowchart of a method for attaching metal chloride nanoparticles, which is another example of the present application.
Figure 8 is a schematic diagram of a method for attaching metal chloride nanoparticles or metal chloride nanocomposite particles, which is another example of the present application.
Figure 9 is a schematic diagram of a method for attaching metal chloride nanoparticles or metal chloride nanocomposite particles, which is another example of the present application.
Figure 10 is a flowchart of a method for attaching metal chloride nanoparticles, which is another example of the present application.
Figure 11 is a schematic diagram of a method for attaching metal chloride nanoparticles or metal chloride nanocomposite particles, which is another example of the present application.
Figure 12 is a schematic diagram of a method for attaching metal chloride nanoparticles or metal chloride nanocomposite particles, which is another example of the present application.
Figure 13 is a flowchart of a method for attaching metal chloride nanoparticles, which is another example of the present application.
Figure 14 is a schematic diagram of a method for attaching metal chloride nanoparticles or metal chloride nanocomposite particles, which is another example of the present application.
Figure 15 is a flowchart of a method for attaching metal chloride nanocomposite particles, which is another example of the present application.
Figure16 is a schematic diagram of a method for attaching metal chloride nanocomposite particles, which is another example of the present application.
Figure 17 is a flowchart of a method for attaching metal chloride nanocomposite particles, which is another example of the present application.
Figure 18 is a flowchart of a method for attaching metal chloride nanocomposite particles, which is another example of the present application.
Figure 19 is a flowchart of a method for attaching metal chloride nanocomposite particles, which is another example of the present application.

### Best Mode

The terms used in the present application are only used to describe specific examples, which are not intended to limit the present invention. The singular expression includes the plural expression unless the context clearly dictates otherwise. In the present application, the term such as "comprise" or "have" is intended to designate that the features, components, and the like described in the specification are present, which does not mean that one or more other features or components, and the like may not be present or may not be added.

Unless defined otherwise, all terms used herein, including technical or scientific terms, have the same meanings as those commonly understood by those having ordinary knowledge in the technical field to which the present invention belongs. The terms such as those defined in commonly used dictionaries should be interpreted as having a meanings consistent with the meanings in the contexts of the related arts, and should not be interpreted in ideal or excessively formal meanings unless explicitly defined in the present application.

In the present application, the term "nano" may mean a size in a nanometer (nm) unit, which may mean, for example, a size of 1 to 2,000 nm or 1 to 1,000 nm, but is not limited thereto. Also, in this specification, the term "nanoparticles" may mean particles having an average particle diameter in a nanometer (nm) unit, which may mean, for example, particles having an average particle diameter of 1 to 2,000 nm or 1 to 1,000 nm, but is not limited thereto.

NaCl is effective in virus inactivation and dehumidification. However, most of processes of attaching it onto mask fibers are applied by a method of impregnating a fiber material with a saline solution or spraying the saline solution directly on the fiber material, and then drying it, but in this case, the electrostatic polarity of the electrostatic fiber (electret fiber) having a filtration function is removed by the saline solution, and the inherent filtration performance is lowered.

Accordingly, the present applicant has devised a dry process capable of attaching nano-sized NaCl particles while minimizing the performance degradation of the electrostatic fiber.

Specifically, nano-sized salt (NaCl) particles or composites thereof are attached to the surface of a fiber material used for mask manufacturing in a dry process, whereby 1) inactivation of bacterial substances, such as viruses, adhering to the surface during use of the mask may be promoted, and 2) at the same time the moisture coming in and out therethrough during use of the mask may be removed. Here, the surface of the wet (swollen) nano NaCl is dissociated into Na+ + Cl- by moisture absorption, whereby the viral suppression ability by Cl- may be greatly improved compared to the dry state. At the same time, comfortableness in use may be ensured by suppressing the moisture content in the air.

Hereinafter, with reference to the accompanying drawings, the mask comprising the nano dried metal chloride salt of the present application and a dry manufacturing process therefor will be described in detail. However, the accompanying drawings are exemplary, where the scope of the mask comprising the nano dried metal chloride salt of the present application and the dry manufacturing process therefor are not limited by the accompanying drawings.

### [First Example]

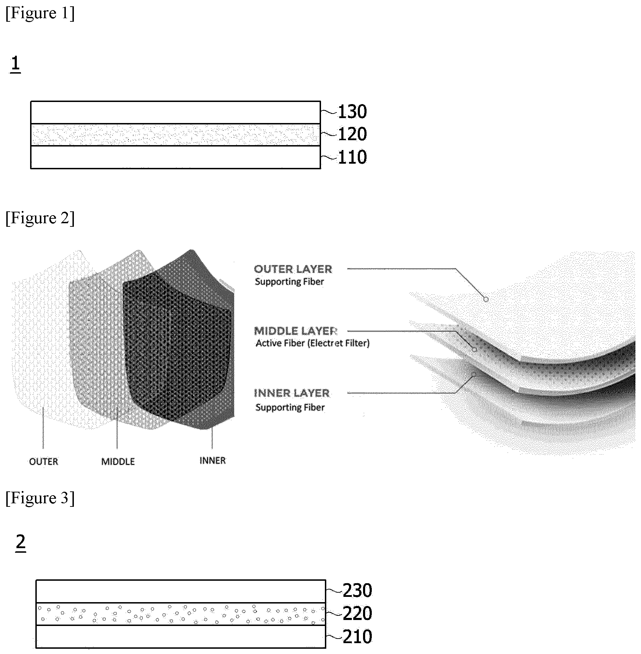

One aspect of the present application is a laminate for a mask. Figure 1 is a schematic diagram of a laminate for a mask, which is one example of the present application. Figure 2 is a schematic diagram of a laminate for a mask, which is another example of the present application.

As shown in Figure 1, the laminate for a mask may comprise an outer layer (110) serving to support the laminate; an inner layer (130) positioned to face the outer layer (110); and an intermediate layer (120) positioned between the outer layer (110) and the inner layer (130), to which a nano dried metal chloride salt is attached.

Here, at least one of the outer layer, the intermediate layer, and the inner layer may be of a fiber material. Preferably, both the outer layer and the inner layer may be of a fiber material. However, it is not limited thereto. The outer layer and the inner layer may be interchangeably the inner skin and the outer skin or the inner layer and the outer layer of the laminate, respectively.

The outer layer and the inner layer cover the intermediate layer, where as described above, it is possible to prevent the detachment of the nano dried metal chloride salt attached to the intermediate layer.

Also, at least one of the outer layer, the intermediate layer, and the inner layer may be a single-layered fiber layer or a multi-layered fiber layer. That is, each layer may be a fiber composed of one layer, but may also be a stacked layer in which each layer is layered in multiple layers.

In addition, the material of each layer or the multiple-layered fiber layer or the single-layered fiber layer may include i) meltblown, ii) cloths, iii) nonwoven fabrics, or iv) a mixture thereof.

For example, when the outer layer consists of three layers as the multi-layered fiber layer, the first layer may be a nonwoven fabric, the second layer may be meltblown, and the third layer may be a nonwoven fabric. It may consist of various combinations.

In this specification, the "nano dried salt" may be a nano-sized solid (dried) salt.

According to the invention, the nano dried metal chloride salt comprises sodium chloride. In one example, the mixture may be seawater comprising the above-described metal chlorides through a filtration process.

In addition, the nano dried sodium chloride salt may include any one of i) a natural salt, a purified salt thereof, and a processed salt thereof. The natural salt may be rock salt or bay salt.

In addition, the nano dried metal chloride salt may be attached to at least one of the outer layer and the inner layer. At this time, the layer that the nano dried metal chloride salt is attached to at least one of the outer layer and the inner layer may be a layer dried after each layer is impregnated with a metal chloride solution.

### [Second Example]

Another aspect which is not part of the claimed invention, is a laminate for a mask. Figure 3 is a schematic diagram of a laminate for a mask, which is another example of the present application.

As shown in Figure 3, the laminate for a mask may comprise an outer layer (210) serving to support the laminate; an inner layer (230) positioned to face the outer layer; and an intermediate layer (220) positioned between the outer layer (210) and the inner layer (230), to which metal chloride nanocomposite particles are attached.

Here, at least one of the outer layer, the intermediate layer, and the inner layer may be of a fiber material. Preferably, both the outer layer and the inner layer may be of a fiber material. However, it is not limited thereto.

The outer and inner layers may be interchangeably the inner skin and the outer skin or the inner layer and the outer layer of the laminate, respectively.

The outer layer and the inner layer cover the intermediate layer, where as described above, it is possible to prevent the detachment of the metal chloride nanocomposite particles attached to the intermediate layer.

In addition, at least one of the outer layer, the intermediate layer, and the inner layer may be a single-layered fiber layer or a multi-layered fiber layer. That is, each layer may be a fiber composed of one layer, but may also be a stacked layer in which each layer is layered in multiple layers.

In addition, the material of each layer or the multi-layered fiber layer or the single-layered fiber layer may include i) meltblown, ii) cloths, iii) nonwoven fabrics, ii) meltblown and or ivii) a mixture of the mixed nonwoven fabrics and meltblown thereof.

As used herein, the "nanocomposite" means a material comprising a nano-sized solid (dried) salt and the above-described additive.

The metal chloride nanocomposite may comprise i) sodium chloride, ii) magnesium chloride, iii) calcium chloride, iv) potassium chloride, or a mixture thereof. In one example, the mixture may be seawater.

Also, the sodium chloride nanocomposite particles may comprise any one of i) a natural salt, a purified salt thereof, and a processed salt thereof. The natural salt may be rock salt or bay salt.

As one example, the metal chloride nanocomposite particles may further comprise at least one of a polymer, porous nanoparticles, an antibacterial material, an antibiotic material, an antiviral material, an inorganic material, a surfactant, and a phosphate. The phosphate may include Na₃PO₄ and Na₂HPO₄, but is not limited thereto.

In implementing the metal chloride nanocomposite particles, porous nanoparticles (silica, activated carbon, zeolite, etc.) for dehumidification or removal of harmful gases (volatile organic compounds, odors, work/carbon dioxide), and FDA-approved antibacterial (ceftazidime/avibactam, obiltoxaximab, bezlotoxumab, delafloxacin, meropenem/vaborbactam, ozenoxacin, etc.)/antibiotic (oritavancin (orbactiv), dalbavancin (dalvance), tedizolid (sivextro), etc.), antiviral (rapivab (peramivir), relenza (zanamivir), tamiflu (oseltamivir), also available as generic), xofluza (baloxavir marboxil)) and inorganic (TiO₂, ZnO, MgO, CuO) substances for maximizing antiviral performance may also be included in the raw material solution, in addition to the metal chloride and the polymer (PLA (polylactic acid), PHBV (hydroxybutyrate-co-3-hydroxyvalerate), PHA (polyhydroxyalkanoate), PP (polypropylene)), Chitosan, Alginate, Shellac, and the like. In addition, surfactants (lecithin, lanolin, saponin, cholesterol, taurine, coconut extracts (disodium cocoamphodiacetate, cocamidopropyl hydroxysultaine, disodium laureth sulfosuccinate, cocamidoropyl betaine), sodium lauryl sulfate, sodium laureth sulfate, ammonium lauryl sulfate, and the like capable of promoting antiviral performance may be included in the raw material solution.

In addition, the metal chloride nanocomposite particles may be attached to at least one of the outer layer and the inner layer. At this time, the layer that the metal chloride nanocomposite particles are attached to at least one of the outer layer and the inner layer may be a layer dried after each layer is impregnated with a metal chloride solution.

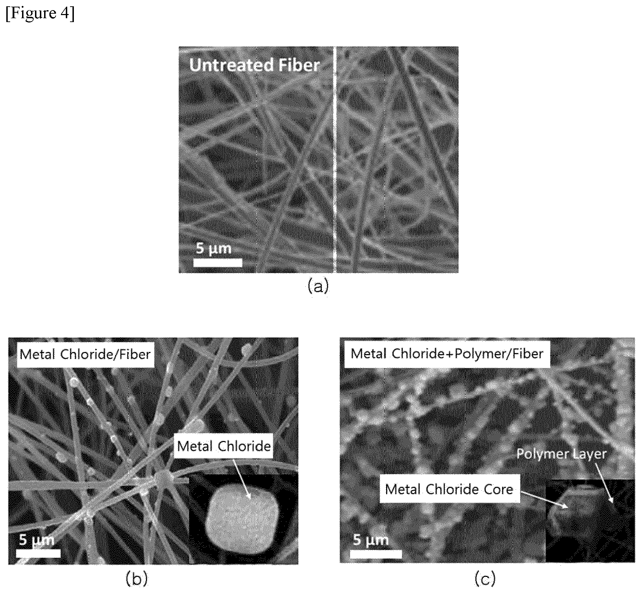

Figure 4 is SEM images of a laminate for a mask, which is another example of the present application.

As shown in Figure 4, it can be confirmed that the metal chloride nanoparticles and the metal chloride nanocomposite particles are attached to (b) and (c), respectively, compared to the case of the untreated fiber of (a). Particularly, in the case of metal chloride nanocomposite particles, the metal chloride may form the core, and the polymer as the additive may form the shell.

### [Third Example]

Another aspect which is not part of the claimed invention, is a mask comprising the above-described laminate.

The above-described laminate is included as a mask body, and additional components applicable in the technical field may be connected or coupled to the mask body, so that these additional components are not particularly limited.

### [Fourth Example]

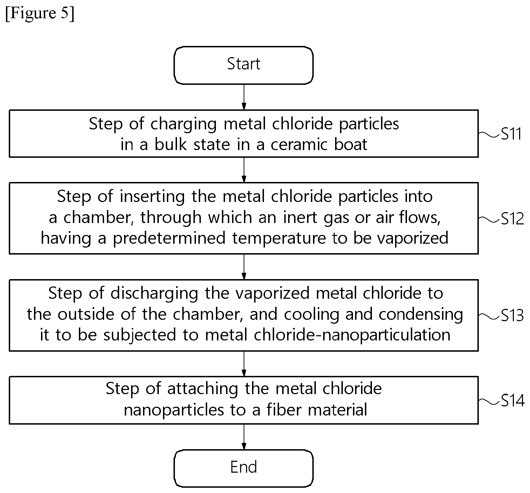

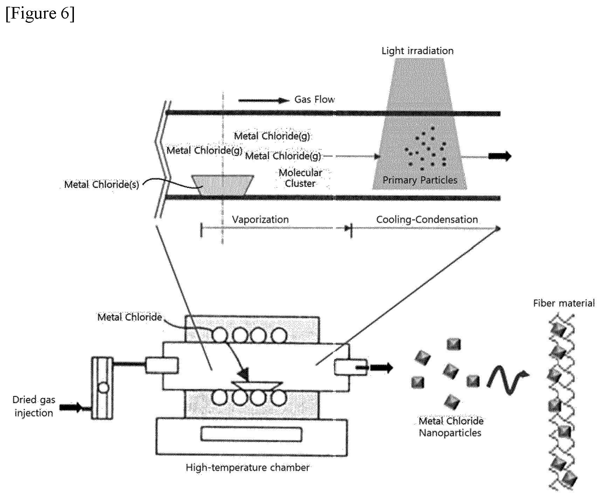

Another aspect which is not part of the claimed invention, is a method for attaching metal chloride nanoparticles. Figure 5 is a flowchart of a method for attaching metal chloride nanoparticles, which is another example of the present application. Figure 6 is a schematic diagram of a method for attaching metal chloride nanoparticles, which is another example of the present application.

As shown in Figure 5, the method may comprise steps of: charging metal chloride particles in a bulk state in a ceramic boat (S11); inserting the metal chloride particles into a chamber, through which an inert gas or air flows, having a predetermined temperature to be vaporized (S12); discharging the vaporized metal chloride to the outside of the chamber, and cooling and condensing it to be subjected to metal chloride-nanoparticulation (S13); and attaching the metal chloride nanoparticles to a fiber material (S14).

First, metal chloride particles in a bulk state are charged in a ceramic boat (S11).

In the present application, the "bulk state" may mean metal chloride particles having a size larger than a nano size.

In the present application, the "ceramic boat" may mean a container for accommodating metal chloride particles.

Then, the metal chloride particles are inserted into a chamber, through which an inert gas or air flows, having a predetermined temperature to be vaporized (S12).

By introducing the metal chloride particles into the chamber at a predetermined high temperature, the metal chloride particles may be vaporized using the high temperature.

The vaporized metal chloride is discharged to the outside of the chamber, cooled, and condensed to be subjected to metal chloride-nanoparticulation (S13).

The vaporized metal chloride is cooled and condensed to be converted into nano-sized metal chloride particles.

Then, the metal chloride nanoparticles are attached to a fiber material (S14).

The metal chloride nanoparticle stream is directly injected into the fiber material, so that 1) the metal chloride nanoparticles may be attached to the fiber surface by mechanical filtration, or 2) the fiber material is attached to the cooling plate and then arranged parallel to the nanoparticle stream, whereby the metal chloride nanoparticles may be attached to the fiber surface by thermophoresis (a phenomenon in which nano-sized particles move from a high-temperature region to a low-temperature region).

By applying the mechanical filtration and/or thermophoresis method described above, it is possible to minimize the reduction of static electricity in the fibers.

However, it may further comprise, before the step of attaching the metal chloride nanoparticles to a fiber material, a step of charging the metal chloride nanoparticles to (+) polarity by exposing them to photons having a work function higher than the work function of the metal chloride nanoparticles to release some of the electrons that the metal chloride nanoparticles retain.

That is, before the metal chloride nanoparticles are attached to a fiber material, a light source (e.g., ultraviolet rays with a wavelength of 170 to 200 nm, preferably 185 nm) capable of generating photons with higher energy than the work function (5.2 eV for NaCl) of the metal chloride is installed to lose some of the electrons possessed by the metal chloride exposed to the photons, so that the metal chloride particles may come into a state charged to (+) polarity, thereby suppressing a phenomenon agglomerated with each other. In order to remove the remaining electrons during this process, an ion trap may be additionally installed together with the light source.

Also, in order to adjust the size of the metal chloride nanoparticles attached to the fiber material, a size classifier may be additionally installed before the fiber material is attached. It is preferable that regarding the adhesion density of the nanoparticles, breathability resistance (pressure drop of the fiber material) does not increase by up to 20% or more.

### [Fifth Example]

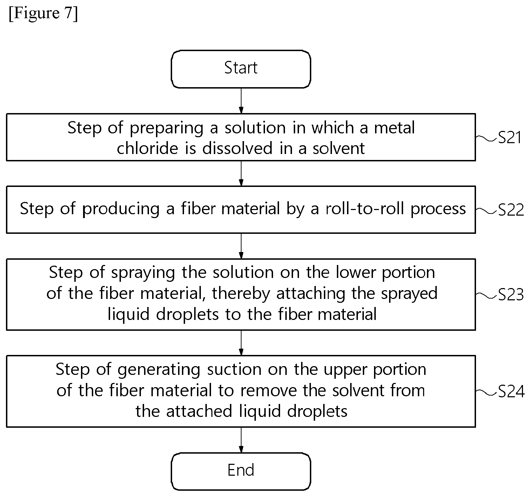

Another aspect of the present application is a method for attaching metal chloride nanoparticles. Figure 7 is a flowchart of a method for attaching metal chloride nanoparticles, which is another example of the present application.

As shown in Figure 7, it may comprise steps of: preparing a solution in which a metal chloride is dissolved in a solvent (S21); producing a fiber material by a roll-to-roll process (S22); spraying the solution on the lower portion of the fiber material, thereby attaching the sprayed liquid droplets to the fiber material (S23); and generating suction on the upper portion of the fiber material to remove the solvent from the attached liquid droplets (S24).

First, a solution in which a metal chloride is dissolved in a solvent is prepared (S21).

For the descriptions of the metal chloride and the like, the afore-mentioned descriptions apply mutatis mutandis.

Then, the fiber material is produced by a roll-to-roll process (S22).

In the present application, the term "roll-to-roll" means that a thin-thick fiber material is made from several flexible plastics or metal foils. The fiber material may be produced by a roll-to-roll process, thereby forming a thin thickness.

Then, the solution is sprayed on the lower portion of the fiber material, and the sprayed liquid droplets are attached to the fiber material (S23).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

Then, the solvent is removed from the attached liquid droplets by generating suction on the upper portion of the fiber material (S24).

The suction may be performed by a suction generator.

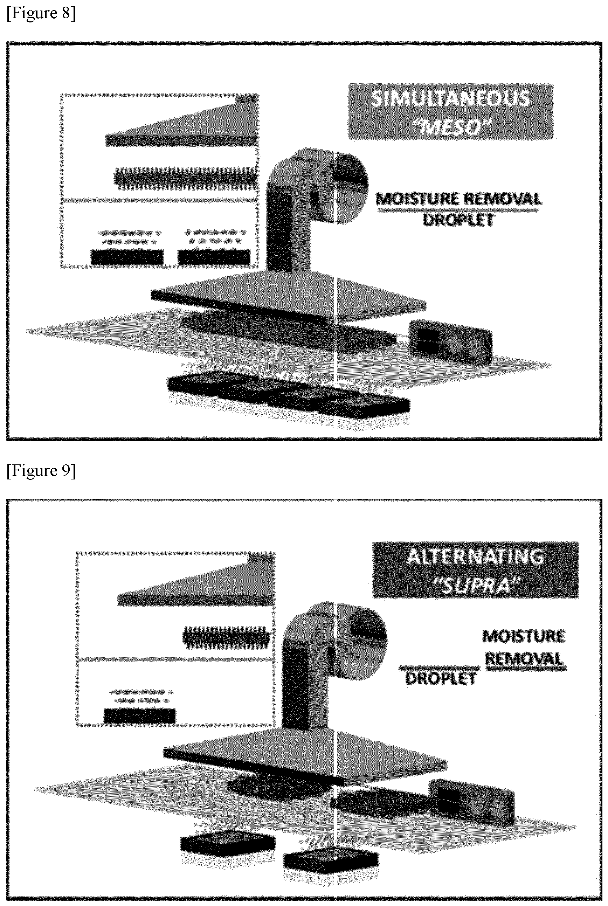

Figure 8 is a schematic diagram of a method for attaching metal chloride nanoparticles or metal chloride nanocomposite particles, which is another example of the present application. In one example, as shown in Figure 8, the step of removing the solvent may further comprise applying heat of 50°C to 150°C on the upper portion of the fiber material. Specifically, by adding a heating device between the fiber material and the suction generator for generating the suction, the heat of 70°C to 130°C or 90°C to 110°C may be applied on the upper portion of the fiber material. By applying heat of the above-described temperature to the fiber material when the solvent is removed, continuous heating may be performed during the drying process, so that the dried salt may be produced without damaging the fiber material.

Figure 9 is a schematic diagram of a method for attaching metal chloride nanoparticles or metal chloride nanocomposite particles, which is another example of the present application. In another example, as shown in Figure 9, the step of removing the solvent may further comprise applying heat of 100°C to 250°C on the upper portion of the fiber material. Specifically, by adding a heating device between the fiber material and the suction generator for generating the suction, the heat of 120°C to 230°C, 150°C to 200°C, or 170°C to 180°C may be applied on the upper portion of the fiber material. By applying heat of the above-described temperature to the fiber material when the solvent is removed, it may be advantageous to generate the dried salt under cross-type heating conditions.

### [Sixth Example]

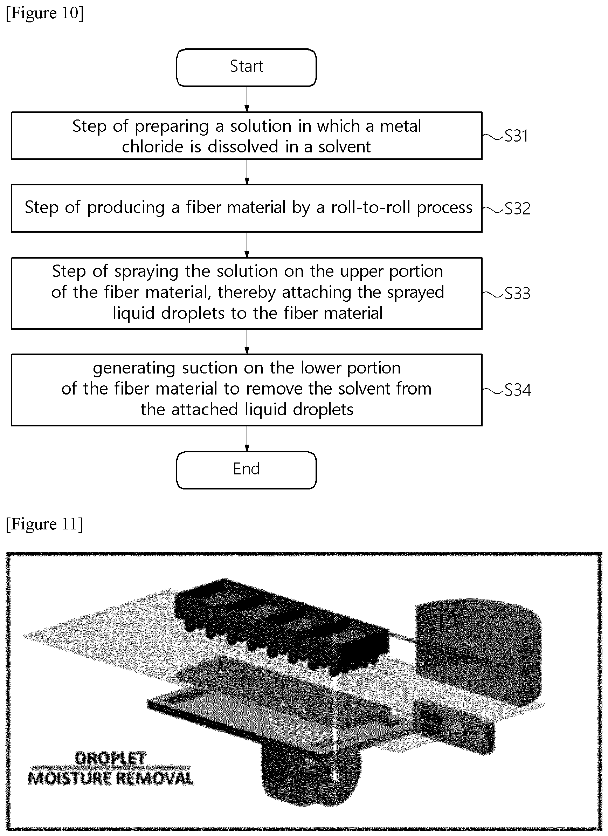

Another aspect of the present application is a method for attaching nanoparticles. Figure 10 is a flowchart of a method for attaching metal chloride nanoparticles, which is another example of the present application.

As shown in Figure 10, it may comprise steps of: preparing a solution in which a metal chloride is dissolved in a solvent (S31); producing a fiber material by a roll-to-roll process (S32); spraying the solution on the upper portion of the fiber material, thereby attaching the sprayed liquid droplets to the fiber material (S33); and generating suction on the lower portion of the fiber material to remove the solvent from the attached liquid droplets (S34).

First, a solution in which a metal chloride is dissolved in a solvent is prepared (S31).

For the descriptions of the metal chloride and the like, the afore-mentioned descriptions apply mutatis mutandis.

Then, the fiber material is produced by a roll-to-roll process (S32).

The fiber material may be produced by a roll-to-roll process, thereby forming a thin thickness.

Then, the solution is sprayed on the upper portion of the fiber material, and the sprayed liquid droplets are attached to the fiber material (S33).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

Then, the solvent is removed from the attached liquid droplets by generating suction on the lower portion of the fiber material (S34).

The suction may be performed by a suction generator.

Figure 11 is a schematic diagram of a method for attaching metal chloride nanoparticles or metal chloride nanocomposite particles, which is another example of the present application. In one example, as shown in Figure 11, the step of removing the solvent may further comprise applying heat of 50°C to 150°C on the lower portion of the fiber material. Specifically, by adding a heating device between the fiber material and the suction generator for generating the suction, the heat of 70°C to 130°C or 90°C to 110°C may be applied on the upper portion of the fiber material. By applying heat of the above-described temperature to the fiber material when the solvent is removed, continuous heating may be performed during the drying process, so that the dried salt may be produced without damaging the fiber material.

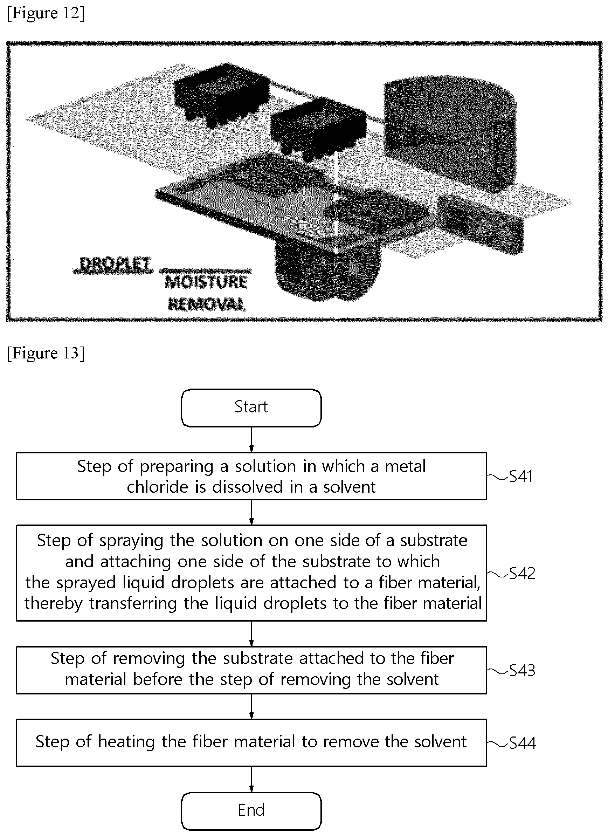

Figure 12 is a schematic diagram of a method for attaching metal chloride nanoparticles or metal chloride nanocomposite particles, which is another example of the present application. In another example, as shown in Figure 12, the step of removing the solvent may further comprise applying heat of 100°C to 250°C on the lower portion of the fiber material. Specifically, by adding a heating device between the fiber material and the suction generator for generating the suction, the heat of 120°C to 230°C, 150°C to 200°C, or 170°C to 180°C may be applied on the upper portion of the fiber material. By applying heat of the above-described temperature to the fiber material when the solvent is removed, it may be advantageous to generate the dried salt under cross-type heating conditions.

### [Seventh Example]

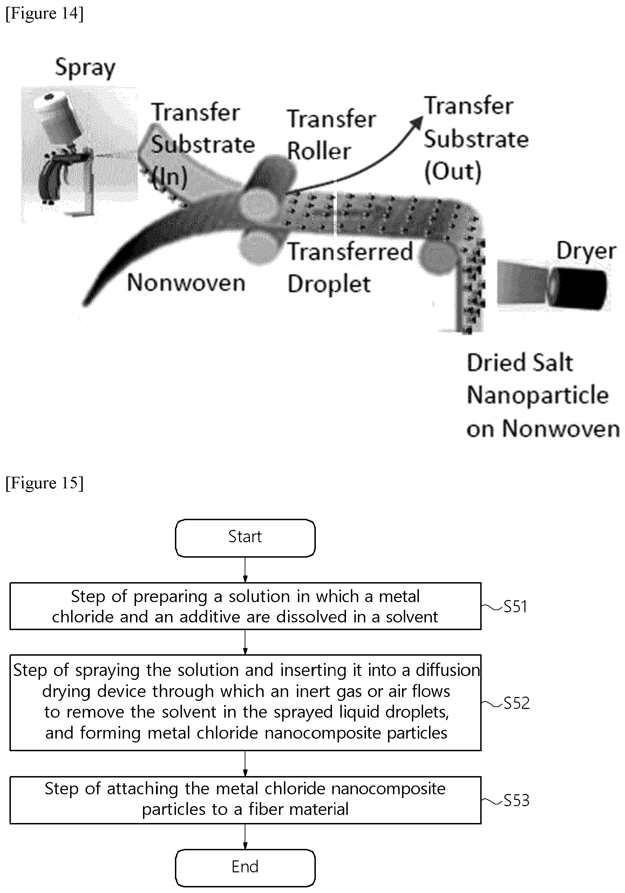

Another aspect of the present application is a method for attaching nanoparticles. Figure 13 is a flowchart of a method for attaching metal chloride nanoparticles, which is another example of the present application. Figure 14 is a schematic diagram of a method for attaching metal chloride nanoparticles or metal chloride nanocomposite particles, which is another example of the present application.

The method for attaching the nanocomposite particles according to Seventh Example may be performed using a roll-to-roll process. Specifically, as shown in Figure 13, it may comprise steps of: preparing a solution in which a metal chloride is dissolved in a solvent (S41); spraying the solution on one side of a substrate and attaching one side of the substrate to which the sprayed liquid droplets are attached to a fiber material, thereby transferring the liquid droplets to the fiber material (S42); and heating the fiber material to remove the solvent (S44).

First, a solution in which a metal chloride is dissolved in a solvent is prepared (S41).

For the descriptions of the metal chloride and the like, the above-mentioned descriptions apply mutatis mutandis.

Then, the solution is sprayed on one side of a substrate, and one side of the substrate to which the sprayed liquid droplets are attached is attached to the fiber material, whereby the liquid droplets are transferred to the fiber material (S42).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

In one example, regarding the transfer, the liquid droplets may be transferred to the fiber material by inserting the sprayed liquid droplets between a roller and a roller in a state where one side of the substrate is attached to face the fiber material. By transferring the droplets to the fiber material in the above-described way, the size of the dried salt may be induced to a smaller size without relying solely on drying, and adhesion positioning on the fiber material or adhesion uniformity may be induced.

One side of the substrate to which the sprayed liquid droplets are attached may have a plane or a pattern. As one side of the substrate to which the sprayed liquid droplets are attached has a plane, high-density liquid droplet transfer may be possible. In addition, as one side of the substrate to which the sprayed liquid droplets are attached has a pattern, selective liquid droplet transfer may be possible.

In one example, it may further comprise a step of removing the substrate attached to the fiber material before the step of removing the solvent (S43). That is, the heating of the fiber material may be performed in a state where the substrate is removed.

Then, the fiber material is heated to remove the solvent (S44).

The descriptions of the heating apply the above-mentioned descriptions mutatis mutandis.

### [Eighth Example]

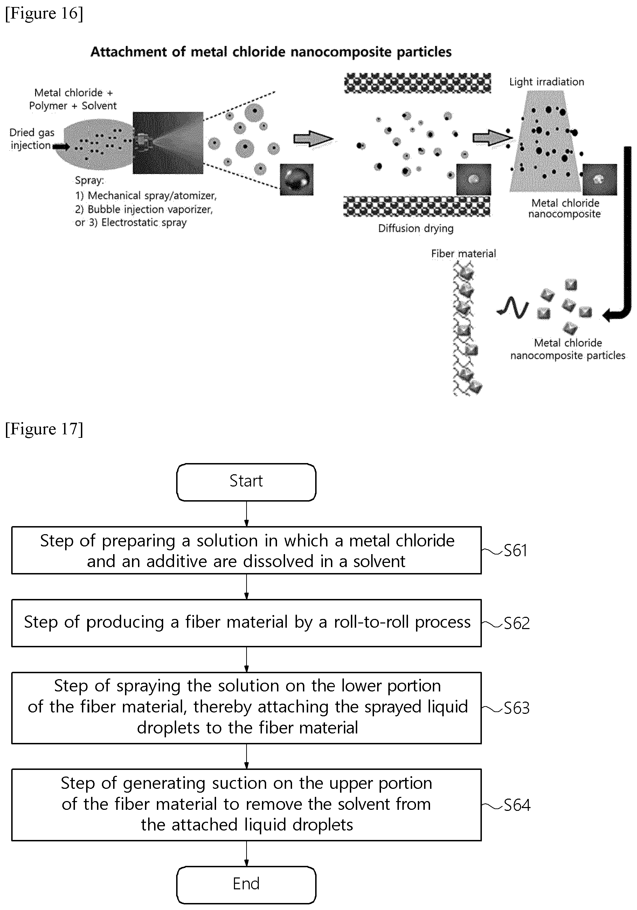

Another aspect of the present application is a method for attaching metal chloride nanocomposite particles. Figure 15 is a flowchart of a method for attaching metal chloride nanocomposite particles, which is another example of the present application. Figure 16 is a schematic diagram of a method for attaching metal chloride nanocomposite particles, which is another example of the present application.

As shown in Figure15, the method may comprise steps of: preparing a solution in which a metal chloride and an additive are dissolved in a solvent (S51); spraying the solution and inserting it into a diffusion drying device through which an inert gas or air flows to remove the solvent in the sprayed liquid droplets, and forming metal chloride nanocomposite particles (S52); and attaching the metal chloride nanocomposite particles to a fiber material (S53).

A solution in which a metal chloride and an additive are dissolved in a solvent is prepared (S51).

In the present application, the "additive" collectively refers to a material capable of forming a nanocomposite other than a metal chloride.

The additive may include at least one of a polymer, porous nanoparticles, an antibacterial material, an antibiotic material, an antiviral material, an inorganic material, a surfactant, and a phosphate.

In implementing the metal chloride nanocomposite particles, porous nanoparticles (silica, activated carbon, zeolite, etc.) for dehumidification or removal of harmful gases (volatile organic compounds, odors, work/carbon dioxide), and FDA-approved antibacterial (ceftazidime/avibactam, obiltoxaximab, bezlotoxumab, delafloxacin, meropenem/vaborbactam, ozenoxacin, etc.)/antibiotic (oritavancin (orbactiv), dalbavancin (dalvance), tedizolid (sivextro), etc.), antiviral (rapivab (peramivir), relenza (zanamivir), tamiflu (oseltamivir), also available as generic), xofluza (baloxavir marboxil)) and inorganic (TiO₂, ZnO, MgO, CuO) substances for maximizing antiviral performance may also be included in the raw material solution, in addition to the metal chloride and the polymer (PLA (polylactic acid), PHBV (hydroxybutyrate-co-3-hydroxyvalerate), PHA (polyhydroxyalkanoate), PP (polypropylene)), Chitosan, Alginate, Shellac, and the like. In addition, surfactants (lecithin, lanolin, saponin, cholesterol, taurine, coconut extracts (disodium cocoamphodiacetate, cocamidopropyl hydroxysultaine, disodium laureth sulfosuccinate, cocamidoropyl betaine), sodium lauryl sulfate, sodium laureth sulfate, ammonium lauryl sulfate, and the like capable of promoting antiviral performance may be included in the raw material solution.

Then, the solution is sprayed and inserted into a diffusion drying device through which an inert gas or air flows, thereby removing the solvent from the sprayed liquid droplets, and forming metal chloride nanocomposite particles (S52).

For example, in order to maximize the antiviral performance of the fiber material, nanocomposite particles may be prepared by mixing metal chloride particles and a polymer having an antiviral function. For example, a solution in which a metal chloride and a polymer (both NaCl and polymer, 10⁻⁴ to 20 w/v%) are dissolved together with a solvent (water, alcohol, etc.) is injected in a spray device and an inert gas or air is injected therein, whereby the metal chloride + polymer liquid droplets generated through the spray device are transported to the diffusion drying device with the injected gas, so that solid metal chloride nanocomposite particles may be generated by removing the solvent in the liquid droplets.

Here, in implementing the metal chloride nanocomposite particles, as the spray device used, a mechanical spray/atomizer, a bubble vaporizer, or an electrostatic sprayer, and the like may be used, and the diffusion drying to remove the solvent from the generated liquid droplets may be performed in combination with a heating system.

In addition, the spraying device for spraying the solution may control the sprayed liquid droplets to have an average particle diameter of 20 µm or less by using a nozzle to which at least one of a piezoelectric vibration device, an ultrasonic device, and a high voltage applying device is applied.

Each of the piezoelectric vibration device, the ultrasonic device, and the high voltage applying device is not particularly limited, which is a device capable of reducing the size of the liquid droplets through an additional process when spraying the solution.

Then, the metal chloride nanocomposite particles are attached to the fiber material (S53).

The metal chloride nanocomposite particle stream is directly injected into the fiber material, so that 1) the metal chloride nanocomposite particles may be attached to the fiber surface by mechanical filtration, or 2) the fiber material is attached to the cooling plate and then arranged parallel to the nanoparticle stream, whereby the metal chloride nanocomposite particles may be attached to the fiber surface by thermophoresis (a phenomenon in which nano-sized particles move from a high-temperature region to a low-temperature region).

However, it may further comprise, before the step of attaching the metal chloride nanocomposite particles to a fiber material, a step of charging the metal chloride nanocomposite particles to (+) polarity by exposing them to photons having a work function higher than the work function of the metal chloride nanocomposite particles to release some of the electrons that the metal chloride nanocomposite particles retain.

That is, before the metal chloride nanocomposite particles are attached to a fiber material, a light source (e.g., ultraviolet rays with a wavelength of 170 to 200 nm, preferably 185 nm) capable of generating photons with higher energy than the work function (5.2 eV for NaCl) of the metal chloride is installed to lose some of the electrons possessed by the metal chloride exposed to the photons, so that the metal chloride particles may come into a state charged to (+) polarity, thereby suppressing a phenomenon agglomerated with each other. In order to remove the remaining electrons during this process, an ion trap may be additionally installed together with the light source.

Also, in order to adjust the size of the metal chloride nanocomposite particles attached to the fiber material, a size classifier may be additionally installed before the fiber material is attached. It is preferable that regarding the adhesion density of the nanocomposite particles, breathability resistance (pressure drop of the fiber material) does not increase by up to 20% or more.

### [Ninth Example]

Another aspect of the present application is a method for attaching nanocomposite particles.

It may comprise steps of: preparing a solution in which a metal chloride and an additive are dissolved in a solvent; spraying the solution, thereby attaching the sprayed liquid droplets to a fiber material; and heating the fiber material to remove the solvent.

For the descriptions of the metal chloride, the additive, and the like, the above-mentioned descriptions apply mutatis mutandis.

In particular, the solvent may be removed by attaching the metal chloride liquid droplets to the laminate, and then immediately heating the laminate, instead of the diffusion drying device.

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

### [Tenth Example]

Another aspect of the present application is a method for attaching nanocomposite particles. Figure 17 is a flowchart of a method for attaching metal chloride nanocomposite particles, which is another example of the present application.

As shown in Figure 17, it may comprise steps of: preparing a solution in which a metal chloride and an additive are dissolved in a solvent (S61); producing a fiber material by a roll-to-roll process (S62); spraying the solution on the lower portion of the fiber material, thereby attaching the sprayed liquid droplets to the fiber material (S63) and generating suction on the upper portion of the fiber material to remove the solvent from the attached liquid droplets (S64).

First, a solution in which a metal chloride and an additive are dissolved in a solvent is prepared (S61).

For the descriptions of the metal chloride, the additive and the like, the above-mentioned descriptions apply mutatis mutandis.

Then, the fiber material is produced by a roll-to-roll process (S62).

The fiber material may be produced by a roll-to-roll process, thereby forming a thin thickness.

Then, the solution is sprayed on the lower portion of the fiber material, and the sprayed liquid droplets are attached to the fiber material (S63).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

Then, the solvent is removed from the attached liquid droplets by generating suction on the upper portion of the fiber material (S64).

The suction may be performed by a suction generator.

In one example, as shown in Figure 8, the step of removing the solvent may further comprise applying heat of 50°C to 150°C on the upper portion of the fiber material. Specifically, by adding a heating device between the fiber material and the suction generator for generating the suction, the heat of 70°C to 130°C or 90°C to 110°C may be applied on the upper portion of the fiber material. By applying heat of the above-described temperature to the fiber material when the solvent is removed, continuous heating may be performed during the drying process, so that the dried salt may be produced without damaging the fiber material.

In another example, as shown in Figure 9, the step of removing the solvent may further comprise applying heat of 100°C to 250°C on the upper portion of the fiber material. Specifically, by adding a heating device between the fiber material and the suction generator for generating the suction, the heat of 120°C to 230°C, 150°C to 200°C, or 170°C to 180°C may be applied on the upper portion of the fiber material. By applying heat of the above-described temperature to the fiber material when the solvent is removed, it may be advantageous to generate the dried salt under cross-type heating conditions.

### [Eleventh Example]

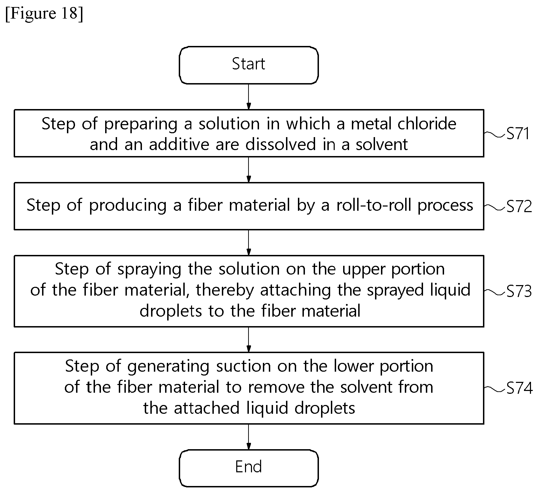

Another aspect of the present application is a method for attaching nanocomposite particles. Figure 18 is a flowchart of a method for attaching metal chloride nanocomposite particles, which is another example of the present application.

As shown in Figure 18, it may comprise steps of: preparing a solution in which a metal chloride and an additive are dissolved in a solvent (S71); producing a fiber material by a roll-to-roll process (S72); spraying the solution on the upper portion of the fiber material, thereby attaching the sprayed liquid droplets to the fiber material (S73) and generating suction on the lower portion of the fiber material to remove the solvent from the attached liquid droplets (S74).

First, a solution in which a metal chloride and an additive are dissolved in a solvent is prepared (S71).

For the descriptions of the metal chloride, the additive and the like, the above-mentioned descriptions apply mutatis mutandis.

Then, the fiber material is produced by a roll-to-roll process (S72).

The fiber material may be produced by a roll-to-roll process, thereby forming a thin thickness.

Then, the solution is sprayed on the upper portion of the fiber material, and the sprayed liquid droplets are attached to the fiber material (S73).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

Then, the solvent is removed from the attached liquid droplets by generating suction on the lower portion of the fiber material (S74).

The suction may be performed by a suction generator.

In one example, as shown in Figure 11, the step of removing the solvent may further comprise applying heat of 50°C to 150°C on the lower portion of the fiber material. Specifically, by adding a heating device between the fiber material and the suction generator for generating the suction, the heat of 70°C to 130°C or 90°C to 110°C may be applied on the upper portion of the fiber material. By applying heat of the above-described temperature to the fiber material when the solvent is removed, continuous heating may be performed during the drying process, so that the dried salt may be produced without damaging the fiber material.

In another example, as shown in Figure 12, the step of removing the solvent may further comprise applying heat of 100°C to 250°C on the lower portion of the fiber material. Specifically, by adding a heating device between the fiber material and the suction generator for generating the suction, the heat of 120°C to 230°C, 150°C to 200°C, or 170°C to 180°C may be applied on the upper portion of the fiber material. By applying heat of the above-described temperature to the fiber material when the solvent is removed, it may be advantageous to generate the dried salt under cross-type heating conditions.

### [Twelfth Example]

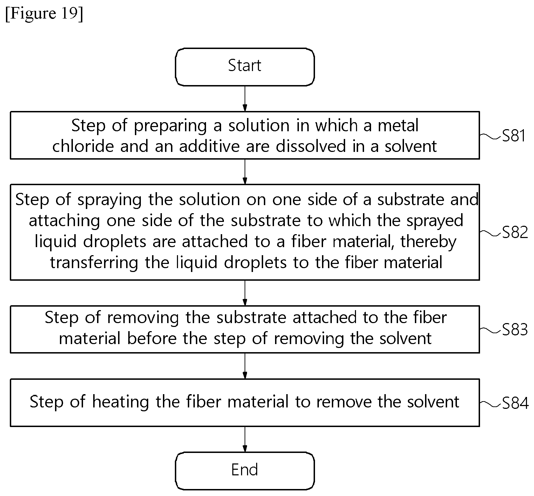

Another aspect of the present application is a method for attaching nanocomposite particles. Figure 19 is a flowchart of a method for attaching metal chloride nanocomposite particles, which is another example of the present application. Figure 14 is a schematic diagram of a method for attaching metal chloride nanoparticles or metal chloride nanocomposite particles, which is another example of the present application.

The method of attaching the nanocomposite particles according to Twelfth Example may be performed using a roll-to-roll process. Specifically, as shown in Figure 19, it may comprise steps of: preparing a solution in which a metal chloride and an additive are dissolved in a solvent (S81); spraying the solution on one side of a substrate and attaching one side of the substrate to which the sprayed liquid droplets are attached to a fiber material, thereby transferring the liquid droplets to the fiber material (S82); and heating the fiber material to remove the solvent (S84).

First, a solution in which a metal chloride and an additive are dissolved in a solvent is prepared (S81).

For the descriptions of the metal chloride, the additive and the like, the above-mentioned descriptions apply mutatis mutandis.

Then, the solution is sprayed on one side of a substrate, and one side of the substrate to which the sprayed liquid droplets are attached is attached to the fiber material, whereby the liquid droplets are transferred to the fiber material (S82).

The spraying device for spraying the solution may prepare the sprayed liquid droplets to have an average particle diameter of 20 µm or less by using a nozzle to which at least one of a piezoelectric vibration device, an ultrasonic device, and a high voltage applying device is applied.

In one example, regarding the transfer, the liquid droplets may be transferred to the fiber material by inserting the sprayed liquid droplets between a roller and a roller in a state where one side of the substrate is attached to face the fiber material. By transferring the droplets to the fiber material in the above-described way, the size of the dried salt may be induced to a smaller size without relying solely on drying, and adhesion positioning on the fiber material or adhesion uniformity may be induced.

One side of the substrate to which the sprayed liquid droplets are attached may have a plane or a pattern. As one side of the substrate to which the sprayed liquid droplets are attached has a plane, high-density liquid droplet transfer may be possible. In addition, as one side of the substrate to which the sprayed liquid droplets are attached has a pattern, selective liquid droplet transfer may be possible.

In one example, it may further comprise a step of removing the substrate attached to the fiber material before the step of removing the solvent (S83). That is, the heating of the fiber material may be performed in a state where the substrate is removed.

Then, the fiber material is heated to remove the solvent (S84).

The descriptions of the heating apply the above-mentioned descriptions mutatis mutandis.

### [Thirteenth Example]

Another aspect of the present application is a method for manufacturing a mask.

The method for manufacturing a mask may comprise, as a laminate for a mask, steps of: preparing an outer layer serving to support the laminate; and an inner layer positioned to face the outer layer; and placing the above-described fiber material as an intermediate layer between the outer layer and the inner layer, and then combining the outer layer or the inner layer thereto.

Even when the nano dried metal chloride salt or the metal chloride nanocomposite particles are attached to at least one of the outer layer and the inner layer, the nano dried metal chloride salt or the metal chloride nanocomposite particles may be attached to other layers rather than the layer to which the metal chloride nanocomposite particles are attached by the impregnation-drying process in the metal chloride solution.

Here, the present application has been described with reference to preferred examples, but it will be understood that those skilled in the art can variously modify and change the present application within the scope without departing from the spirit and field of the present invention as set forth in the claims below.

### <Explanation of Reference Numerals>

110: outer layer
120: intermediate layer
130: inner layer
210: outer layer
220: intermediate layer
230: inner layer

## Claims

1. A method for attaching metal chloride nanoparticles comprising steps of:
preparing a solution in which sodium chloride is dissolved in a solvent;
producing a fiber material by a roll-to-roll process;
spraying the solution on the lower portion of the fiber material, thereby attaching the sprayed liquid droplets to the fiber material; and
generating suction on the upper portion of the fiber material to remove the solvent from the attached liquid droplets.

2. A method for attaching metal chloride nanoparticles comprising steps of:
preparing a solution in which sodium chloride is dissolved in a solvent;
producing a fiber material by a roll-to-roll process;
spraying the solution on the upper portion of the fiber material, thereby attaching the sprayed liquid droplets to the fiber material; and
generating suction in the lower portion of the fiber material to remove the solvent from the attached liquid droplets.

3. A method for attaching metal chloride nanoparticles comprising steps of:
preparing a solution in which sodium chloride is dissolved in a solvent;
spraying the solution on one side of a substrate and attaching one side of the substrate to which the sprayed liquid droplets are attached to a fiber material, thereby transferring the liquid droplets to the fiber material; and
heating the fiber material to remove the solvent.

4. A method for manufacturing a mask comprising steps of:
preparing, as a laminate for the mask, an outer layer serving to support the laminate; and an inner layer positioned to face the outer layer; and
placing the fiber material resulting of the method of any one of claims 1 to 3 as an intermediate layer between the outer layer and the inner layer, and then combining the outer layer or the inner layer thereto.

## Patentansprüche

1. Verfahren zum Befestigen von Metallchlorid-Nanopartikeln, umfassend die folgenden Schritte:
Herstellen einer Lösung, in der Natriumchlorid in einem Lösungsmittel gelöst ist;
Herstellen eines Fasermaterials durch ein Roll-to-Roll-Verfahren;
Aufsprühen der Lösung auf den unteren Teil des Fasermaterials, wodurch die aufgesprühten Flüssigkeitströpfchen an dem Fasermaterial befestigt werden; und
Erzeugen einer Saugwirkung auf dem oberen Teil des Fasermaterials, um das Lösungsmittel von den befestigten Flüssigkeitströpfchen zu entfernen.

2. Verfahren zum Befestigen von Metallchlorid-Nanopartikeln, umfassend die folgenden Schritte:
Herstellen einer Lösung, in der Natriumchlorid in einem Lösungsmittel gelöst ist;
Herstellen eines Fasermaterials durch ein Roll-to-Roll-Verfahren;
Aufsprühen der Lösung auf den oberen Teil des Fasermaterials, wodurch die aufgesprühten Flüssigkeitströpfchen an dem Fasermaterial befestigt werden; und
Erzeugen einer Saugwirkung in dem unteren Teil des Fasermaterials, um das Lösungsmittel von den befestigten Flüssigkeitströpfchen zu entfernen.

3. Verfahren zum Befestigen von Metallchlorid-Nanopartikeln, umfassend die folgenden Schritte:
Herstellen einer Lösung, in der Natriumchlorid in einem Lösungsmittel gelöst ist;
Aufsprühen der Lösung auf eine Seite eines Substrats und Befestigen einer Seite des Substrats, an der die aufgesprühten Flüssigkeitströpfchen befestigt sind, an einem Fasermaterial, wodurch die Flüssigkeitströpfchen auf das Fasermaterial übertragen werden; und
Erhitzen des Fasermaterials, um das Lösungsmittel zu entfernen.

4. Verfahren zur Herstellung einer Maske, umfassend die folgenden Schritte:
Herstellen einer äußeren Schicht als Laminat für die Maske, die dazu dient, das Laminat zu stützen; und einer inneren Schicht, die der äußeren Schicht gegenüberliegend positioniert ist; und
Anordnen des Fasermaterials, das aus dem Verfahren nach einem der Ansprüche 1 bis 3 resultiert, als Zwischenschicht zwischen der äußeren Schicht und der inneren Schicht und anschließendes Verbinden der äußeren Schicht oder der inneren Schicht damit.

## Revendications

1. Procédé pour fixer des nanoparticules de chlorure métallique comprenant les étapes de :
préparation d'une solution dans laquelle du chlorure de sodium est dissous dans un solvant ;
production d'un matériau fibreux par un procédé rouleau à rouleau ;
pulvérisation de la solution sur la partie inférieure du matériau fibreux, fixant ainsi les gouttelettes de liquide pulvérisé au matériau fibreux ; et
génération d'une aspiration sur la partie supérieure du matériau fibreux pour éliminer le solvant des gouttelettes de liquide fixées.

2. Procédé pour fixer des nanoparticules de chlorure métallique comprenant les étapes de :
préparation d'une solution dans laquelle du chlorure de sodium est dissous dans un solvant ;
production d'un matériau fibreux par un procédé rouleau à rouleau ;
pulvérisation de la solution sur la partie supérieure du matériau fibreux, fixant ainsi les gouttelettes de liquide pulvérisé au matériau fibreux ; et
génération d'une aspiration dans la partie inférieure du matériau fibreux pour éliminer le solvant des gouttelettes de liquide fixées.

3. Procédé pour fixer des nanoparticules de chlorure métallique comprenant les étapes de :
préparation d'une solution dans laquelle du chlorure de sodium est dissous dans un solvant ;
pulvérisation de la solution sur un côté d'un substrat et fixation d'un côté du substrat auquel les gouttelettes de liquide pulvérisé sont fixées à un matériau fibreux, transférant ainsi les gouttelettes de liquide sur le matériau fibreux ; et
chauffage du matériau fibreux pour éliminer le solvant.

4. Procédé pour fabriquer un masque comprenant les étapes de :
préparation, en tant que stratifié pour le masque, d'une couche externe servant à soutenir le stratifié ; et d'une couche interne positionnée pour faire face à la couche externe ; et
placement du matériau fibreux résultant du procédé selon l'une quelconque des revendications 1 à 3 en tant que couche intermédiaire entre la couche externe et la couche interne, puis combinaison de la couche externe ou de la couche interne à celle-ci.
